(19) Europäisches Patentamt
European Patent Office
Office européen des brevets

(11) **EP 2 159 548 A2**

(12) **EUROPEAN PATENT APPLICATION**

(43) Date of publication:
**03.03.2010 Bulletin 2010/09**

(51) Int Cl.:
***G01D 5/244*** *(2006.01)*

(21) Application number: **09168477.9**

(22) Date of filing: **24.08.2009**

| | |
|---|---|
| (84) Designated Contracting States:<br>**AT BE BG CH CY CZ DE DK EE ES FI FR GB GR HR HU IE IS IT LI LT LU LV MC MK MT NL NO PL PT RO SE SI SK SM TR** | (72) Inventors:<br>• **Ura, Noritake**<br>  **Osaka-shi, Osaka 542-8502 (JP)**<br>• **Kubo, Ryouichi**<br>  **Osaka-shi, Osaka 542-8502 (JP)** |
| (30) Priority: **25.08.2008 JP 2008215384** | (74) Representative: **Leson, Thomas Johannes Alois** |
| (71) Applicant: **JTEKT CORPORATION**<br>**Chuo-ku**<br>**Osaka-shi**<br>**Osaka 542-8502 (JP)** | **Tiedtke-Bühling-Kinne & Partner GbR**<br>**TBK-Patent**<br>**Bavariaring 4**<br>**80336 München (DE)** |

(54) **Abnormality detection unit for resolver and electric power steering apparatus**

(57) In a resolver and an electric power steering apparatus that uses the resolver, one ends of resolver coils that are provided at regular intervals with respect to the rotation center of a resolver rotor are electrically connected at one connection point, and the voltage at the connection point is maintained at a predetermined reference voltage. If at least one of the condition that the square sum Fs does not satisfy the condition $F1 < Fs < F2$ (the square sum Fs is not within a predetermined first range) and the condition that the sum Fa does not satisfy the condition $|Fa| < F3$ (the sum Fa is not within a predetermined second range) is satisfied, the ECU determines that an abnormality has occurred in the resolver.

FIG.7

EP 2 159 548 A2

**Description**

BACKGROUND OF THE INVENTION

1. Field of the Invention

The invention relates to an abnormality detection unit for a resolver that detects the rotational position of a motor, and an electric power steering apparatus that uses the abnormality detection unit.

2. Description of the Related Art

An example of art related to a resolver that detects the rotational position of a motor is a variable reluctance angle detector described in Japanese Patent No. 3103487. The angle detector is an m-phase excitation and n-phase output resolver in which an excitation coil and an output coil are wound around only a stator with one slot pitch for each slot in such a manner that the magnetic flux distribution is in a sine-wave form. This configuration makes it possible to wind these coils around the stator with a machine, thereby contributing to reduction in the cost of producing the angle detector.

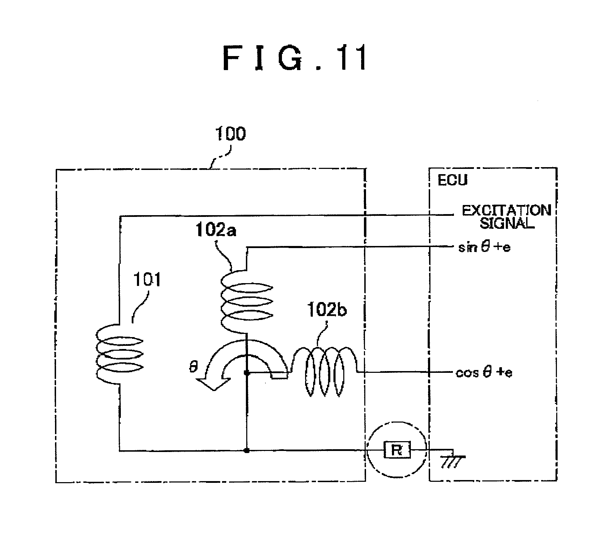

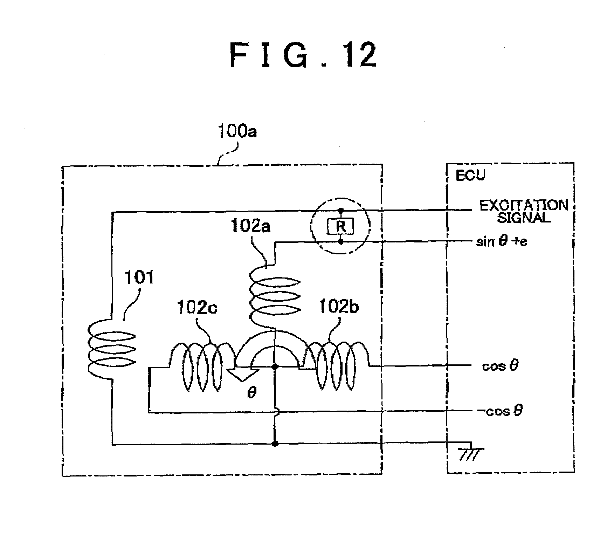

FIG. 11 is a schematic diagram showing the configuration of a resolver 100 according to first related art. FIG. 12 is a schematic diagram showing the configuration of a resolver 100a according to second related art. In recent years, there has been a demand for technologies that make it possible to detect various types of abnormalities that may occur in a resolver. For example, in the one-phase excitation and two-phase output resolver 100 shown in FIG. 11, the square sum that is the sum of the square values of the amplitude values of a sine-wave signal and a cosine-wave signal that are output signals from the two phases is theoretically equal to 1. Base on this theory, whether an abnormality has occurred in the resolver 100 is determined. However, when a certain type of abnormality occurs in the resolver 100, the electrical angle θ of a rotor that is a detection target does not change. In such a case, the abnormality of the resolver 100 is not detected.
More specific description will be provided below on the assumption that an abnormal situation where the resistance of a ground line (hereinafter, referred to as "GND line") increases has occurred (see a portion within a circle indicated by a dashed line shown in FIG. 11) in the resolver 100 that includes an excitation coil 101, a sine-wave phase coil 102a and a cosine-wave phase coil 102b, as shown in FIG. 11. If a voltage error e is caused due to occurrence of the abnormal situation, the amplitude value D1s of a sine-wave signal changes to a value of sinθ + e, and the amplitude value D1c of a cosine-wave signal changes to a value of cosθ + e.
For example, when the electrical angle θ is 225° and the voltage error e is √2, the amplitude value D1s and the amplitude value D1c are calculated as follows.

$$D1s = \sin\theta + e = \sin(225°) + \sqrt{2} = \sqrt{2} / 2$$

$$D1c = \cos\theta + e = \cos(225°) + \sqrt{2} = \sqrt{2} / 2$$

The electrical angle θ and the square sum Fs are calculated as follows.

$$\theta = \tan - 1 \{D1s / D1c\}$$
$$= \tan - 1 \{(\sin\theta + e) / (\cos\theta + e)\} = 45°$$

$$Fs = (D1s)^2 + (D1c)^2$$
$$= (\sin\theta + e)^2 + (\cos\theta + e)^2 = 1$$

When the square sum Fs is equal to 1 even if the voltage error e is caused, it is not possible to detect the abnormality based on the square sum Fs. Furthermore, an erroneous value is calculated as the electrical angle θ, that is, the calculated value of the electrical angle θ is 45° although the actual electrical angle θ is 225°,

In order to address this problem, the one-phase excitation and three-phase output resolver 100a shown in FIG. 12 may be employed. The resolver 100a is able to output, in addition to a sine-wave signal and a cosine-wave signal, a third output signal. The sum of the amplitude value of the third signal and the amplitude value of the cosine-wave signal is theoretically equal to 0. In this case, whether an abnormality has occurred in the resolver 100a is determined based on the square sum that is the sum of the square value of the amplitude value of the sine-wave signal and the square value of the amplitude value of the cosine-wave signal, and the sum of the amplitude value of the cosine-wave signal and the amplitude value of the third output signal. However, when a certain type of abnormality occurs in the resolver 100a, the electrical angle θ does not change. In such a case, even if the above-described configuration is employed, the abnormality of the resolver 100a is not detected.

More specific description will be provided below on the assumption that an abnormal situation where an excitation coil 101 and a sine-wave phase coil 102a are short-circuited with each other has occurred (see a portion within a circle indicated by a dashed line shown in FIG. 12) in the resolver 100a that includes the excitation coil 101, the sine-wave phase coil 102a, a cosine-wave phase coil 102b, and a third phase coil 102c, as shown in FIG. 12, Only the amplitude value D2s of a sine-wave signal changes to a value of sinθ + e due to occurrence of the abnormal situation, and the amplitude value D2c of a cosine-wave signal and the amplitude value D2cc of a third output signal are not changed and maintained at cosθ and -cosθ, respectively.

For example, when the electrical angle θ is 270° and the voltage error e is 2, the amplitude value D2s, the amplitude value D2c, and the amplitude value D2cc are calculated as follows.

$$D2s = \sin\theta + e = \sin(270°) + 2 = 1$$

$$D2c = \cos\theta = \cos(270°) = 0$$

$$D2cc = -\cos\theta = -\cos(270°) = 0$$

The electrical angle θ, the square sum Fs, and the sum Fa are calculated as follows.

$$\theta = \tan-1\{D2s / D2c\}$$
$$= \tan-1\{(\sin\theta + e) / (\cos\theta)\} = 90°$$

$$Fs = (D2s)^2 + (D2c)^2 = (\sin\theta + e)^2 + (\cos\theta)^2 = 1$$

$$Fa = \cos(D2c) + \{-\cos(D2cc)\} = 0$$

When the square sum Fs is equal to 1 and the sum Fa is equal to 0 even if the excitation coil 101 and the sine-wave phase coil 102a are short-circuited with each other, it is not possible to detect the abnormality based on the square sum Fs and the sum Fa. Furthermore, an erroneous value is calculated as the electrical angle θ, that is, the calculated value of the electrical angle θ is 90° although the actual electrical angle θ is 270°.

SUMMARY OF THE INVENTION

It is an object of the invention to provide an abnormality detection unit for a resolver with which the above-described problem is resolved, and an electric power steering apparatus that uses the abnormality detection unit.

An aspect of the invention relates to an abnormality detection unit for a resolver that includes at least three resolver coils that have different phases and that are provided at regular intervals with respect to the rotation center of a rotor of the resolver, and an excitation coil that excites each of the resolver coils, the resolver outputting sine-wave signals that correspond to the electrical angle of the rotor from one ends of the resolver coils based on an excitation signal that is input in the excitation coil. The other ends of the resolver coils are electrically connected to each other at one connection point, and the voltage at the connection point is maintained at a predetermined reference voltage. It is determined that an abnormality has occurred in the resolver, if at least one of the condition that the sum of the square values of the amplitude values of the sine-wave signals is not within a predetermined first range and the condition that the sum of the amplitude values of the sine-wave signals is not within a predetermined second range is satisfied.

In the resolver in the aspect described above, the other ends of the resolver coils that are provided at regular intervals with respect to the rotation center of the rotor of the resolver are electrically connected to each other at one connection point, and the voltage at the connection point is maintained at the predetermined reference voltage. It is determined that an abnormality has occurred in the resolver, if at least one of the condition that the sum of the square values (hereinafter, referred to as "square sum" where appropriate) of the amplitude values of the sine-wave signals is not within the predetermined first range and the condition that the sum of the amplitude values of the sine-wave signals is not within the predetermined second range is satisfied.

The square sum of the amplitude values of the sine-wave signals output from the resolver coils is theoretically a constant value. Therefore, if the square sum is not within the predetermined first range centered on the constant value, it is determined that an abnormality has occurred in the resolver. Also, the sum of the amplitude values of the sine-wave signals is theoretically equal to 0 (zero) because the voltage at the connection point at which the resolver coils provided at regular intervals are connected to each other is maintained at the predetermined reference voltage, Therefore, if the sum is not within the predetermined second range centered on 0, it is determined that an abnormality has occurred in the resolver.

Therefore, even if the square sum is within the predetermined first range because an abnormality of the resolver as shown in FIG. 12 has occurred, it is possible to detect the abnormality based on the fact that the sum is not within the predetermined second range. Accordingly, it is possible to detect various types of abnormalities that may occur in the resolver.

In the abnormality detection unit according to the aspect described above, at least two electrical angles may be calculated by an electrical angle calculator. Then, it may be determined that an abnormality has occurred in the resolver, if at least one of the condition that the square sum is not within the predetermined first range, the condition that the sum is not within the predetermined second range, and the condition that one of the differences between the electrical angles calculated by the electrical angle calculator is not within a predetermined third range is satisfied,

If a certain type of abnormality has occurred in the resolver, the square sum is within the predetermined first range and the sum is within the predetermined second range. However, with the configuration described above, even if such an abnormality occurs in the resolver, it is possible to detect the abnormality based on the fact that one of the differences between the electrical angles is not within the predetermined third range. Accordingly, it is possible to detect various types of abnormalities that may occur in the resolver.

In an electric power steering apparatus that uses the resolver provided with the abnormality detection unit, a steering operation is assisted by a motor based on the sine-wave signals output from the resolver, and the motor is controlled based on the abnormality of the resolver detected by the abnormality detection unit.

Therefore, it is possible to implement the electric power steering apparatus that benefits from various effects such as an effect of detecting various types of abnormalities that may occur in the resolver. In the electric power steering apparatus, upon detection of an abnormality of the resolver, a failsafe control for prohibiting generation of an assist force with the use of the motor is executed. Accordingly, the electric power steering apparatus improves the reliability of the vehicle by making the behavior of the vehicle when an abnormality occurs in the resolver safer.

BRIEF DESCRIPTION OF THE DRAWINGS

The foregoing and further features and advantages of the invention will become apparent from the following description of example embodiments with reference to the accompanying drawings, wherein like numerals are used to represent like elements and wherein:

FIG 1 is a view showing the configuration of an electric power steering apparatus according to a first embodiment of the invention;
FIG 2 is an enlarged view showing a portion in an ellipse indicated by a dashed line II shown in FIG. 1;
FIG. 3 is an enlarged view showing a portion in an ellipse indicated by a dashed line III shown in FIG. 1;
FIG 4 is a block diagram showing the electrical configuration of an ECU that controls the electric power steering apparatus in the first embodiment;
FIG. 5 is a schematic diagram showing the configuration of a resolver according to the first embodiment;

FIG. 6 is a flowchart showing a motor resolver abnormality detection process that is executed by the ECU according to the first embodiment;

FIG. 7 is a schematic diagram showing the configuration of a resolver according to a modification of the first embodiment;

FIG. 8 is a flowchart showing a motor resolver abnormality detection process that is executed by the ECU according to a second embodiment of the invention;

FIG. 9 is a graph showing the relationship between the electrical angle and the square sum when two resolver coils having different phases are short-circuited with each other;

FIG. 10 is a schematic diagram showing the configuration of a resolver that differs from the resolvers in the embodiments;

FIG. 11 is a schematic diagram showing the configuration of a resolver according to first related art; and

FIG 12 is a schematic diagram showing the configuration of a resolver according to second related art.

## DETAILED DESCRIPTION OF THE EMBODIMENTS

Hereafter, example embodiments of the invention will be described with reference to the accompanying drawings.

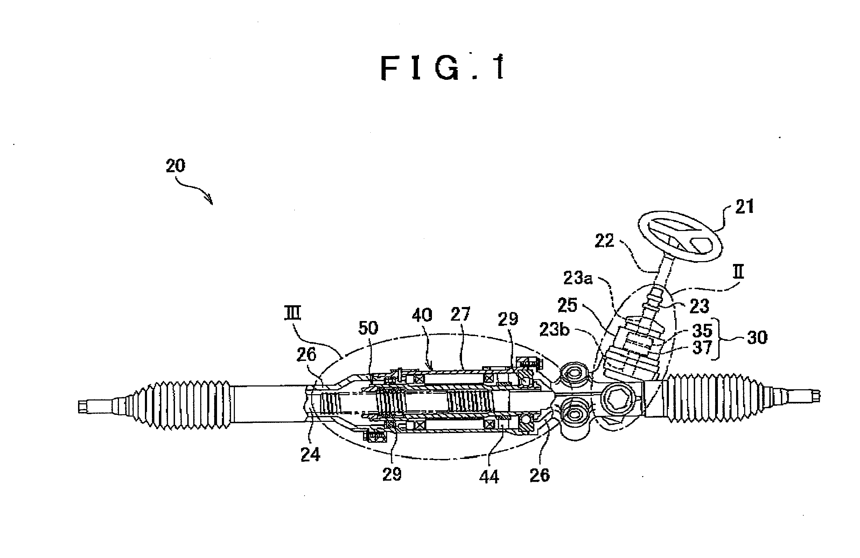

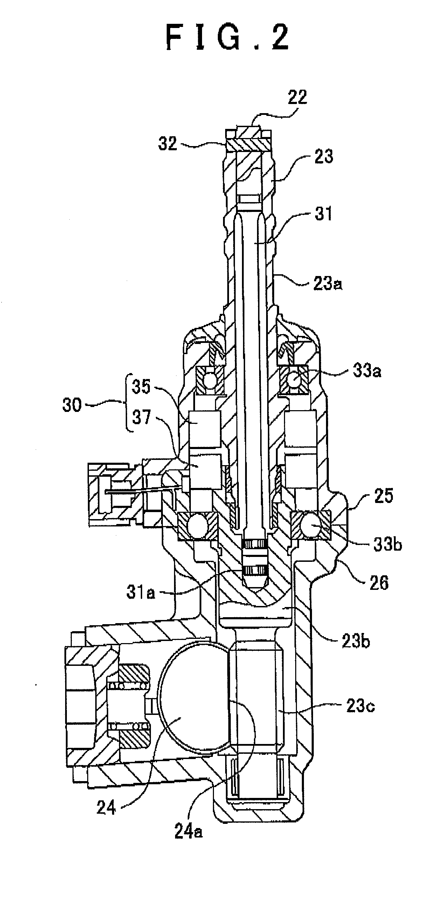

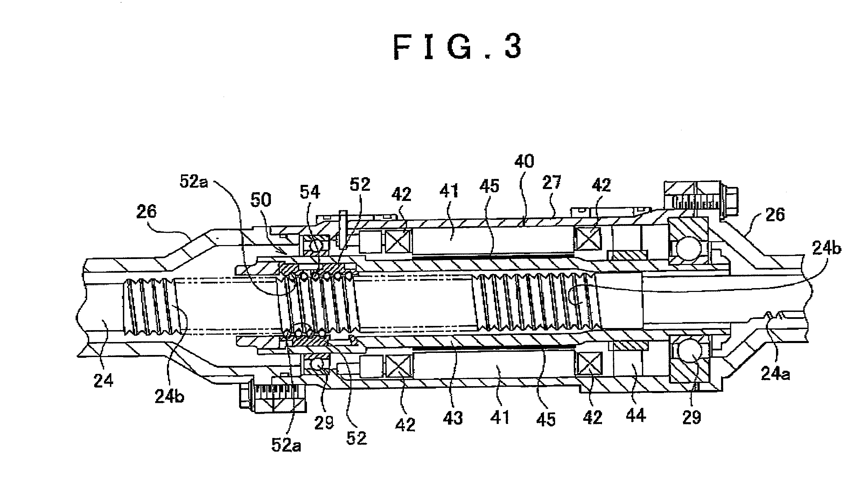

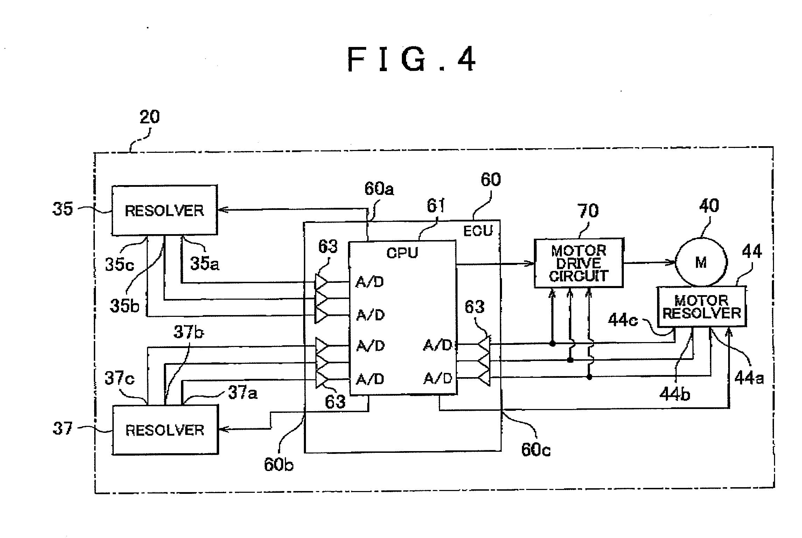

The configuration of an electric power steering apparatus 20 according to a first embodiment of the invention will be described with reference to FIG 1 to FIG. 4. FIG. 1 is a view showing the configuration of the electric power steering apparatus 20 according to the first embodiment of the invention. FIG. 2 is an enlarged view showing a portion in an ellipse indicated by a dashed line II shown in FIG. 1. FIG. 3 is an enlarged view showing a portion in an ellipse indicated by a dashed line III shown in FIG. 1. FIG. 4 is a block diagram showing the electrical configuration of an ECU 60 that controls the electric power steering apparatus 20 according to the first embodiment.

As shown in FIG. 1 and FIG. 4, the electric power steering apparatus 20 according to the first embodiment mainly includes a steering wheel 21, a steering shaft 22, a pinion shaft 23, a rack shaft 24, a torque sensor 30, a motor 40, a motor resolver 44, a ball screw mechanism 50, the ECU 60, etc. In the electric power steering apparatus 20, the steering state achieved by the steering wheel 21 is detected by the torque sensor 30, and an assist force appropriate for the steering state is generated by the motor 40. In this way, the electric power steering apparatus 20 assists a driver in performing a steering operation. Vehicle steering wheels (not shown) are connected to respective ends of the rack shaft 24 via tie-rods, etc.

As shown in FIG. 1 and FIG. 2, the upper end of the steering shaft 22 is connected to the steering wheel 21, and an input shaft 23a of the torque sensor 30 housed in a pinion housing 25 and a torsion bar 31 are connected to the lower end of the steering shaft 22 via a pin 32. An output shaft 23b of the pinion shaft 23 is splined to a lower end 31a of the torsion bar 31.

The input shaft 23a of the pinion shaft 23 is supported by a bearing 33a and the output shaft 23b of the pinion shaft 23 is supported by a bearing 33b in such a manner that the input shaft 23a and the output shaft 23b are able to rotate within the pinion housing 25. In addition, a resolver 35 is provided between the input shaft 23a and the pinion housing 25, and a resolver 37 is provided between the output shaft 23b and the pinion housing 25. Each of the resolver 35 and the resolver 37 that constitute the torque sensor 30 is a one-phase excitation and three-phase output resolver, and detects the rotational angle (electrical angle) achieved by the steering wheel 21. The resolver 35 is electrically connected to the ECU 60 via a first output terminal 35a, a second output terminal 35b, a third output terminal 35c, etc. The resolver 37 is electrically connected to the ECU 60 via a first output terminal 37a, a second output terminal 37b, a third output terminal 37c, etc.

A pinion gear 23c is formed at an end portion of the output shaft 23b of the pinion shaft 23. The pinion gear 23c is in meshing engagement with a rack groove 24a of the rack shaft 24. Thus, a rack-and-pinion steering mechanism is formed.

As shown in FIG.1 and FIG. 3, the rack shaft 24 is housed in a rack housing 26 and a motor housing 27, and a ball screw groove 24b is formed in a middle portion of the rack shaft 24 in a helical fashion. A cylindrical motor shaft 43 that is rotatably supported by a bearing 29 is provided around the ball screw groove 24b. The motor shaft 43 extends coaxially with the rack shaft 24. The motor shaft 43 constitutes the motor 40, together with a stator 41, excitation coils 42, etc. The motor shaft 43 is rotated when the magnetic fields generated by the excitation coils 42 wound around the stator 41 act on a permanent magnet 45 provided on the outer periphery of the motor shaft 43 that serves as a rotor.

A ball screw nut 52 is fitted on the inner periphery of the motor shaft 43. A ball screw groove 52a is formed in the ball screw nut 52 in a helical fashion. Multiple balls 54 are provided between the ball screw groove 52a of the ball screw nut 52 and the ball screw groove 24b of the rack shaft 24 in such a manner that the balls 54 are able to roll therebetween. Thus, the ball screw mechanism 50 that is moved on the rack shaft 24 in the axial direction by rotation of the motor shaft 43 is formed.

The rotation torque generated by forward or reverse rotation of the motor shaft 43 is converted into reciprocating motion of the rack shaft 24 in the axial direction by the ball screw mechanism 50 that includes the ball grooves 24b and 52a, etc. Then, the reciprocating motion is transmitted through the pinion shaft 23 that constitutes, together with the rack shaft 24, the rack-and-pinion steering mechanism, and used as an assist force by which a steering force that is applied by the driver to operate the steering wheel 21 is reduced.

The motor resolver 44 is provided between the motor shaft 43 of the motor 40 and the motor housing 27. The motor resolver 44 is a one-phase excitation and three-phase output resolver, and detects the rotational angle (electrical angle) of the motor shaft 43. The motor resolver 44 is electrically connected to the ECU 60 via a first output terminal 44a, a second output terminal 44b, a third output terminal 44c, etc (see FIG. 4).

As shown in FIG. 4, the ECU 60 includes a CPU 61, buffers 63, etc, The ECU 60 transmits excitation signals from output ports 60a, 60b and 60c to the resolver 35, resolver 37 and the motor resolver 44, respectively.

Sine-wave signals from the output terminals 35a to 35c of the resolver 35 and sine-wave signals from the output terminals 37a to 37c of the resolver 37 are input in the ECU 60. The direct-current offset voltage Vref is applied to each sine-wave signal via the buffer 63 of the ECU 60. Then, the sine-wave signal is input in an A/D converter of the CPU 61, and undergoes A/D conversion. The CPU 61 detects the rotational angles of the resolver 35 and the resolver 37 based on the sine-wave signals that have undergone A/D conversion and calculates the steering torque. Then, the CPU 61 provides a motor drive circuit 70 with an assist command for assisting the driver to perform the steering operation based on the steering torque and the rotational angle of the motor 40 described later. The motor voltage that corresponds to the current command value is supplied to the motor 40 from the motor drive circuit 70. As a result, a steering force generated by the motor 40 assists the driver in performing the steering operation.

The motor resolver 44 detects the rotational angle of the motor 40, and sine-wave signals that correspond to the rotational angle are fed back from the output terminals 44a to 44c to the motor drive circuit 70, and input in the ECU 60. The direct-current offset voltage Vref is applied to each sine-wave signal via the buffer 63 of the ECU 60. Then, the sine-wave signal is input in the A/D converter of the CPU 61, and undergoes A/D conversion.

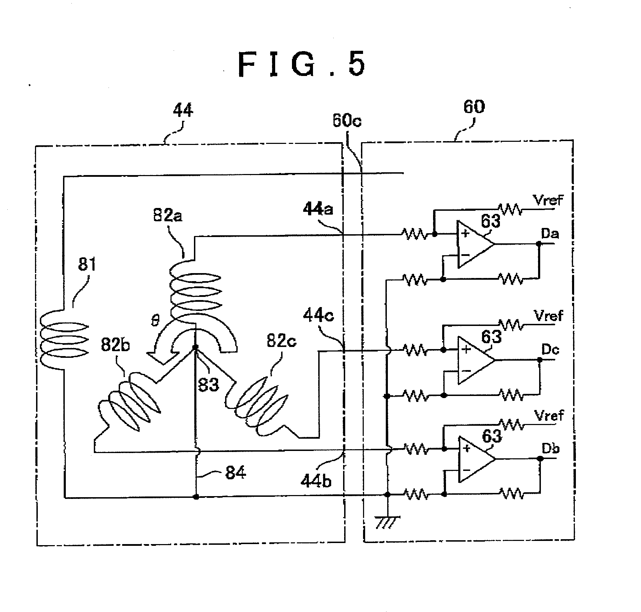

The configurations of the resolvers 35 and 37 and the motor resolver 44 will be described with reference to FIG. 5. Because these resolvers have substantially the same configuration, the configuration of the motor resolver 44 will be described below as a representative example. FIG. 5 is a schematic diagram showing the configuration of the resolver according to the first embodiment.

The motor resolver 44 includes an excitation coil 81, and three coils having different phases, that is, a first resolver coil 82a, a second resolver coil 82b, and a third resolver coil 82c. The resolver coils 82a to 82c are provided at regular intervals with respect to the rotation center of a resolver rotor (not shown) that rotates together with the motor shaft 43. One ends of the resolver coils 82a to 82c are electrically connected to the output terminals 44a to 44c, respectively, and the other ends of the resolver coils 82a to 82c are electrically connected to each other at a connection point 83, and the connection point 83 is grounded via a grounding wire 84. Thus, the voltage at the connection point 83 is maintained at a predetermined reference voltage.

The motor resolver 44 outputs the first sine-wave signal Sa, the second sine-wave signal Sb, and the third sine-wave signal Sc from the first output terminal 44a, the second output terminal 44b, and the third output terminal 44c, respectively, according to the excitation signal So that is input in the excitation coil 81. When the excitation cycle is $\omega$, the excitation amplitude is E, the resolver voltage transformer ratio is k, and the electrical angle is $\theta$, if the excitation signal of So = E $\times$ sin($\omega$t) is input in the excitation coil 81, theoretical equations for the sine-wave signals Sa to Sc output from the output terminals 44a to 44c are expressed by Equations 1 to 3, respectively.

$$Sa = \sin\theta \times k \times E \times \sin(\omega t) \qquad \text{Equation 1}$$

$$Sb = \sin(\theta + 120°) \times k \times E \times \sin(\omega t) \qquad \text{Equation 2}$$

$$Sc = \sin(\theta + 240°) \times k \times E \times \sin(\omega t) \qquad \text{Equation 3}$$

As shown in FIG. 5, the direct-current offset voltage Vref (= 2.5V) is applied to each of the sine-wave signals Sa to Sc via the buffer 63, whereby each of the sine-wave signals Sa to Sc is converted into a digital signal having a direct-current component that corresponds to the amplitude value (hereinafter, referred to as "amplitude values Da to Dc" where appropriate).

Next, the manner of detecting an abnormality of the resolver according to the first embodiment will be described using the motor resolver 44 as an example.

In the first embodiment, the square sum Fs that is the sum of the square values of the amplitude values Da to Dc and the sum Fa that is the sum of the amplitude values Da to Dc are calculated, and whether an abnormality has occurred in the resolver is determined based on the square sum Fs and the sum Fa.

$$Fs = (Da)^2 + (Db)^2 + (Dc)^2 \qquad \text{Equation 4}$$

$$Fa = Da + Db + Dc \qquad \text{Equation 5}$$

As indicated by Equation 6, the square sum Fs is theoretically equal to 1.5. The resolver coils 82a to 82c are provided at regular intervals with respect to the rotation center of the resolver rotor, and the voltage at the connection point 83 at which the resolver coils 82a to 82c are connected to each other is maintained at the predetermined reference voltage. Therefore, as indicated by Equation 7, the sum Fa is equal to 0. Accordingly, if the square sum Fs calculated by Equation 4 is not within a predetermined range centered on 1.5, or if the sum Fa calculated by Equation 5 is not within a predetermined range centered on 0, it is determined that an abnormality has occurred in the resolver.

$$Fs = \{\sin\theta\}^2 + \{\sin(\theta + 120°)\}^2$$
$$+ \{\sin(\theta + 240°)\}^2 = 1.5 \qquad \text{Equation 6}$$

$$Fa = \sin\theta + \sin(\theta + 120°)$$
$$+ \sin(\theta + 240°) = 0 \qquad \text{Equation 7}$$

The description below will be provided on the assumption that the excitation coil 81 and the first resolver coil 82a are short-circuited with each other and only the amplitude value Da is changed to a value of $\sin\theta + e$, as in an example shown in FIG. 12. At this time, the square sum Fs is calculated as follows.

$$Fs = \{\sin\theta + e\}^2 + \{\sin(\theta + 120°)\}^2$$
$$+ \{\sin(\theta + 240°)\}^2$$
$$= 1.5 + 2e \times \sin\theta + e^2$$

Therefore, if the electrical angle $\theta$ is a value at which the condition $2e \times \sin\theta + e^2 = 0$ is satisfied, it is not possible to detect the abnormality of the resolver.

Meanwhile, the sum Fa is calculated as follows.

$$Fa = (\sin\theta + e) + \sin(\theta + 120°)$$
$$+ \sin(\theta + 240°)$$
$$= 0 + e$$

Therefore, it is possible to detect the abnormality of the resolver based on the sum Fa independently of the value of the electrical angle $\theta$.

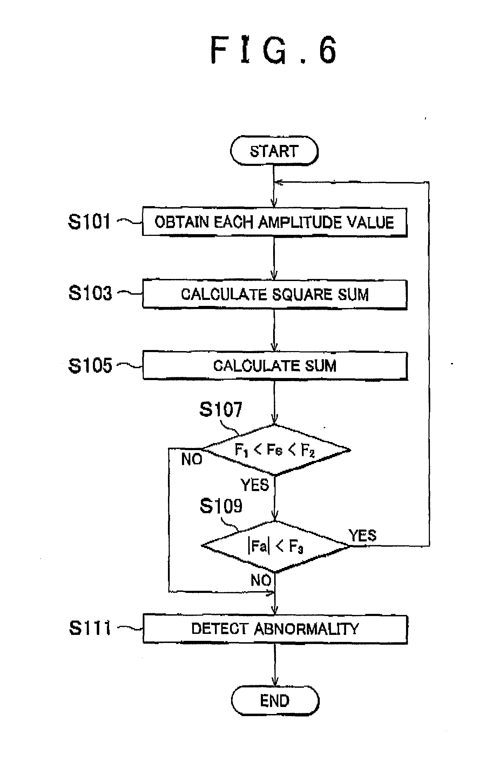

Next, a resolver abnormality detection process that is executed by the ECU 60 that serves as an abnormality detection unit for a resolver will be described with reference to a flowchart in FIG. 6. The flowchart in FIG. 6 shows the resolver abnormality detection process that is executed by the ECU 60 according to the first embodiment.

First, in step S101 in FIG. 6, an output signal obtaining process is executed. In this process, the amplitude values Da to Dc that are input via the buffers 63 are obtained. Then, in a square sum calculation process in step S103, the square sum Fs is calculated by substituting the amplitude values Da to Dc into Equation 4. In a sum calculation process in step S105, the sum Fa is calculated by substituting the amplitude values Da to Dc into Equation 5.

In step S107, it is determined whether the square sum Fs satisfies the condition F1 < Fs < F2 (whether the square sum Fs is larger than F1 and smaller than F2). F1 and F2 are thresholds used to determine whether the square sum Fs is within the predetermined range centered on 1.5 in order to determine whether an abnormality has occurred in the resolver, as described above. For example, F1 is set to 1, and F2 is set to 2.

If it is determined that the square sum Fs satisfies the condition F1 < Fs < F2, it is determined based on the square sum Fs that an abnormality has not occurred in the resolver, and an affirmative determination is made in step S107 ("YES" in S107). The range in which the condition F1 < Fs < F2 is determined to be satisfied in step S107 may be a "predetermined first range" in the invention.

Next, it is determined in step S109 whether the sum Fa satisfies the condition |Fa| < F3 (whether the absolute value of the sum Fa is smaller than F3). F3 is a threshold that is used to determine whether the sum Fa is within the predetermined range centered on 0 in order to determine whether an abnormality has occurred in the resolver. For example, F3 is set to 1.

If it is determined that the sum Fa satisfies the condition |Fa| < F3, it is determined based on the sum Fa that an abnormality has not occurred in the resolver, and an affirmative determination is made in step S109 ("YES" in S109). If it is determined based on the square sum Fs and the sum Fa that an abnormality has not occurred in the resolver, step S101 and the following steps are executed again. The range in which the condition |Fa| < F3 is determined to be satisfied in step S109 may be a "predetermined second range" in the invention.

On the other hand, if an abnormality has occurred in the resolver and the square sum Fs does not satisfy the condition F1 < Fs < F2, a negative determination is made in step S107 ("NO" in S107). Also, even when the square sum Fs satisfies the condition F1 < Fs < F2 because an abnormality as shown in FIG. 12 has occurred in the resolver, if the sum Fa does not satisfy the condition |Fa| < F3, a negative determination is made in step S109 ("NO" in S109).

If a negative determination is made in one of step S107 and step S109, it is determined in step S111 that an abnormality has occurred in the resolver. Upon detection of the abnormality of the resolver, a failsafe control for prohibiting generation of an assist force with the use of the motor 40 is executed.

As described above, in the resolvers 35, 37 and 44 of the electric power steering apparatus 20 according to the first embodiment, the other ends of the resolver coils 82a to 82c that are provided at regular intervals with respect to the rotation center of the resolver rotor are electrically connected to each other at the connection point 83, and the voltage at the connection point 83 is maintained at the reference voltage. If at least one of the condition that the square sum Fs does not satisfy the condition F1 < Fs < F2 (the square sum Fs is not within the predetermined first range) and the condition that the sum Fa does not satisfy the condition |Fa| < F3 (the sum Fa is not within the predetermined second range) is satisfied in one of the resolvers, the ECU 60 that serves as the abnormality detection unit for the resolvers determines that an abnormality has occurred in that resolver.

Thus, if the square sum Fs does not satisfy the condition F1 < Fs < F2, it is determined that an abnormality has occurred in the resolver. In addition, even if the square sum Fs satisfies the condition F1 < Fs < F2 because an abnormality as shown in FIG. 12 has occurred in the resolver, if the sum Fa does not satisfy the condition |Fa| < F3, it is possible to detect the abnormality of the resolver. Therefore, it is possible to detect various types of abnormalities that may occur in the resolver.

The electric power steering apparatus 20 according to the first embodiment benefits from various effects such as an effect of detecting various types of abnormalities that may occur in the resolver. In the electric power steering apparatus 20, upon detection of an abnormality of the resolver, the failsafe control for prohibiting generation of an assist force with the use of the motor 40 is executed. Accordingly, the electric power steering apparatus 20 improves the reliability of the vehicle by making the behavior of the vehicle when an abnormality occurs in the resolver safer.

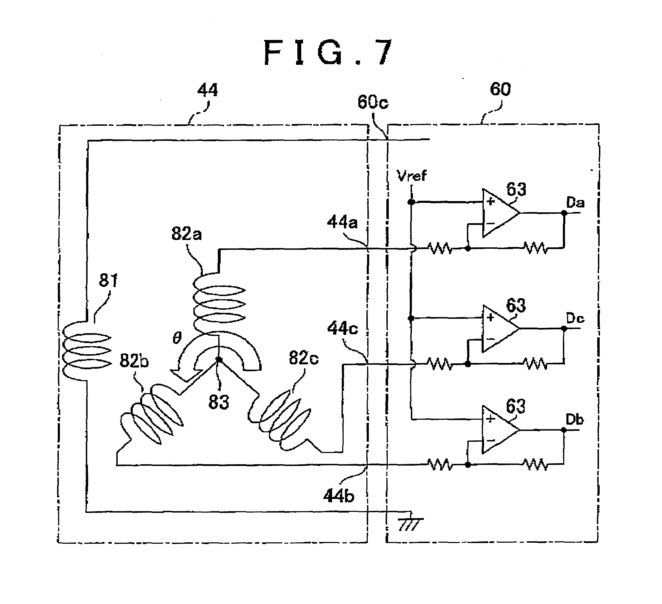

FIG. 7 is a schematic diagram showing the configuration of a resolver according to a modification of the first embodiment. As shown in FIG. 7, the grounding wire 84 that is electrically connected to the resolver at the connection point 83 as shown in FIG. 5 may be omitted, and the voltage at the connection point 83 may be maintained at the reference voltage with the use of each output line. Even when this configuration is employed, if an abnormality has occurred in the resolver, at least one of the condition that the square sum Fs does not satisfy the condition F1 < Fs < F2 and the condition that the sum Fa does not satisfy the condition |Fa| < F3 is satisfied, it is possible to detect the abnormality of the resolver based on the square sum Fs and the sum Fa.

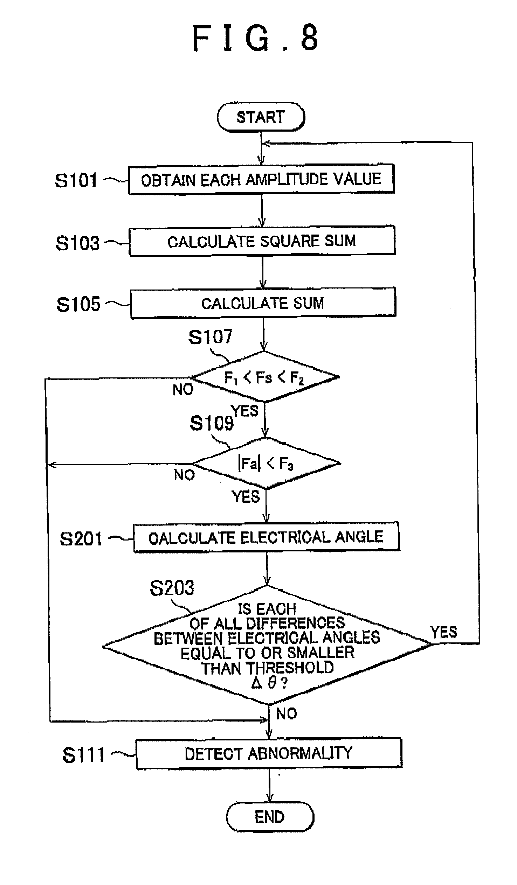

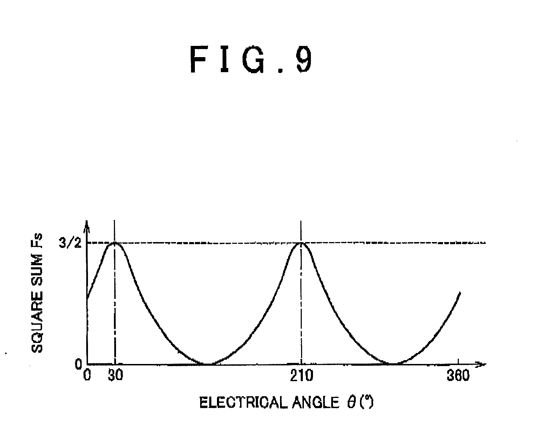

Next, a second embodiment of the invention will be described with reference to FIG. 8 and FIG. 9. FIG. 8 is a flowchart showing a resolver abnormality detection process that is executed by the ECU 60 according to the second embodiment. FIG. 9 is a graph showing the relationship between the electrical angle θ and the square sum Fs when two resolver coils having different phases are short-circuited with each other.

The electric power steering apparatus 20 according to the second embodiment differs from the electric power steering apparatus 20 according to the first embodiment in that the resolver abnormality detection process is executed according to the flowchart shown in FIG. 8 instead of the flowchart shown in FIG. 6.

In the resolver abnormality detection process according to the first embodiment, if the first resolver coil 82a and the second resolver coil 82b are short-circuited with each other and the electrical angle θ is at or around the value at which amplitude values of the signals output from the resolver coils 82a and 82b are equal to each other, the sensitivity for detection of the abnormality of the resolver is reduced.

The reason why the detection sensitivity is reduced will be described below in detail. The relationship indicated by Equation 8 and the relationship indicated in FIG. 9 are established between the square sum Fs and the electrical angle θ when the first resolver coil 82a and the second resolver coil 82b are short-circuited with each other.

$$
\begin{aligned}
Fs = {} & [\{\sin\theta + \sin(\theta + 120°)\} / 2]^2 \\
& + [\{\sin\theta + \sin(\theta + 120°)\} / 2]^2 \\
& + \{\sin(\theta + 240°)\}^2 \\
\approx {} & 1.5 \{\sin(\theta + 60°)\}^2 \leq 1.5 \qquad \text{Equation 8}
\end{aligned}
$$

Also, because the sum Fa is equal to 0 as indicated by Equation 9, it is not possible to detect the abnormality of the resolver.

$$
\begin{aligned}
Fa = {} & \{\sin\theta + \sin(\theta + 120°)\} / 2 \\
& + \{\sin\theta + \sin(\theta + 120°)\} / 2 \\
& + \sin(\theta + 240°) \\
= {} & 0 \qquad \text{Equation 9}
\end{aligned}
$$

Therefore, as the electrical angle θ approaches 30° or 210°, the sensitivity for detection of the abnormality of the resolver is reduced. Therefore, according to the second embodiment, three electrical angles (θ1 to θ3) are obtained based on the amplitude values Da to Dc. If one of the absolute values of the difference between the electrical angles θ1 and θ2, the difference between the electrical angles θ2 and θ3, and the difference between the electrical angles θ3 and θ1 is larger than the threshold Δθ described later, it is determined that an abnormality has occurred in the resolver.

A resolver abnormality detection process that is executed by the ECU 60 of the electric power steering apparatus 20 according to the second embodiment will be described with reference to the flowchart in FIG. 8.

As in the first embodiment, if an affirmative determination is made in step S 109 ("YES" in S109) in FIG. 8, an electrical angle calculation process is executed in step S201. In this process, three electrical angles (electrical angles θ1, θ2, and θ3) that are calculated based on two different values among the three values of the amplitude values Da to Dc are obtained by Equations 10b to 12b.

More specifically, when the electrical angle calculated based on the amplitude values Da and Db is θ1, the relationship indicated by Equation 10a is established.

$$
Da / Db = \sin\theta1 / \sin(\theta1 + 120°) \qquad \text{Equation 10a}
$$

when Equation 10a is solved for θ1, Equation 10b is derived.

$$
\theta1 = \tan^{-1} \{Da \times \sqrt{3} / (2 \times Db + Da)\} \qquad \text{Equation 10b}
$$

When the electrical angle that is calculated based on the amplitude values Db and Dc is θ2, the relationship indicated by Equation 11a is established.

$$Db / Dc = \sin(\theta2 + 120°) / \sin(\theta2 + 240°) \quad \text{Equation 11a}$$

When Equation 11a is solved for θ2, Equation 11b is derived.

$$\theta2 = \tan^{-1}\{(Db + Dc) \times \sqrt{3} / (Dc - Db)\} \quad \text{Equation 11b}$$

When the electrical angle that is calculated based on the amplitude values Dc and Da is θ3, the relationship indicated by Equation 12a is established.

$$Dc / Da = \sin(\theta3 + 240°) / \sin\theta3 \quad \text{Equation 12a}$$

When Equation 12a is solved for θ3, Equation 12b is derived.

$$\theta3 = \tan^{-1}\{-Da \times \sqrt{3} / (2 \times Dc + Da)\} \quad \text{Equation 12b}$$

After the electrical angles θ1 to θ3 are calculated, it is determined in step S203 whether each of all the differences between the electrical angles is equal to or smaller than the threshold Δθ. More specifically, when all the conditions expressed by Equations 13 to 15 are satisfied, it is determined that each of all the differences between the electrical angles is equal to or smaller than the threshold Δθ.

$$|\theta1 - \theta2| \leq \Delta\theta \quad \text{Equation 13}$$

$$|\theta2 - \theta3| \leq \Delta\theta \quad \text{Equation 14}$$

$$|\theta3 - \theta1| \leq \Delta\theta \quad \text{Equation 15}$$

The threshold Δθ is a value that is set based on, for example, the steering state of the vehicle. The threshold Δθ is set to, for example, 10°.

When each of all the conditions expressed by Equations 13 to 15 is satisfied and an affirmative determination is made in step S203 ("YES" in S203) because each of all the differences between the electrical angles is equal to or smaller than the threshold Δθ, it is determined that an abnormality has not occurred in the resolver based on the square sum Fs, the sum Fa and the differences between the electrical angles. Then, step S101 and the following steps are executed again. The range in which each of all the conditions expressed by Equations 13 to 15 is determined to be satisfied in step S203 may be a "predetermined third range" in the invention.

When a certain type of abnormality occurs in the resolver, the relationships indicated by Equations 8 and 9 are established. However, if the abnormality of this type has occurred, one of the conditions expressed by Equations 13 to 15 is not satisfied. Therefore, a negative determination is made in step S203 ("NO" in S203) and it is determined in step S111 that the abnormality has occurred in the resolver. Upon detection of the abnormality of the resolver, the failsafe control for prohibiting generation of an assist force with the use of the motor 40 is executed.

As described above, the ECU 60 of the electric power steering apparatus 20 according to the second embodiment obtains the electrical angles θ1 to θ3 that are calculated based on the two different amplitude values among the three amplitude values Da to Dc. If at least one of the condition that the square sum Fs does not satisfy the condition F1 < Fs < F2, the condition that the sum Fa does not satisfy the condition |Fa| < F3, and the condition that one of the difference between the electrical angle θ1 and the electrical angle θ2, the difference between the electrical angle θ2 and the electrical angle θ3, and the difference between the electrical angle θ3 and the electrical angle θ1 is larger than the threshold Δθ (one of these differences is not within the predetermined third range) is satisfied in one of the resolvers, the ECU 60 determines that an abnormality has occurred in that resolver.

When a certain type of abnormality occurs in the resolver, the relationships expressed by Equations 8 and 9 are established. In this case, the square sum Fs satisfies the condition F1 < Fs < F2 and the sum Fa satisfies the condition |Fa| < F3. Even in this case, it is possible to detect the abnormality of the resolver based on the fact that one of the difference between the electrical angle θ1 and the electrical angle θ2, the difference between the electrical angle θ2 and the electrical angle θ3, and the difference between the electrical angle θ3 and the electrical angle θ1 is larger than the threshold Δθ. Therefore, it is possible to reliably detect various types of abnormalities that may occur in the resolver.

The invention is not limited to the above-described embodiments. The invention may be implemented as follows. In the cases described below, the same effects as those in the embodiments described above are obtained.

1) In each of the above-described embodiments, instead of a three-phase output resolver, a resolver having four or more output phases may be used as each of the resolvers 35, 37 and 44. In this case, resolver coils are provided at regular intervals with respect to the rotation center of a rotor of the resolver. One ends of the resolver coils are electrically connected to each other at one connection point, and the voltage at the connection point is maintained at a predetermined reference voltage.

With this configuration, the square sum Fs of the amplitude values of sine-wave signals that are output from the resolver coils is theoretically a constant value. Therefore, it is determined that an abnormality has occurred in the resolver if the square sum Fs is not within a predetermined first range centered on the constant value, Because the voltage at the connection point at which the resolver coils provided at regular intervals are connected to each other is maintained at the predetermined reference voltage, the sum Fa of the amplitude values of the sine-wave signals is theoretically equal to 0. Therefore, it is determined that an abnormality has occurred in the resolver if the sum Fa is not within a predetermined second range centered on 0.

In the second embodiment, two or more electrical angles that are calculated based on the two different values among the amplitude values are obtained. If one of the differences between the electrical angles is larger than the threshold Δθ (one of the differences between the electrical angles is not within a predetermined third range), it is determined that an abnormality has occurred in the resolver.

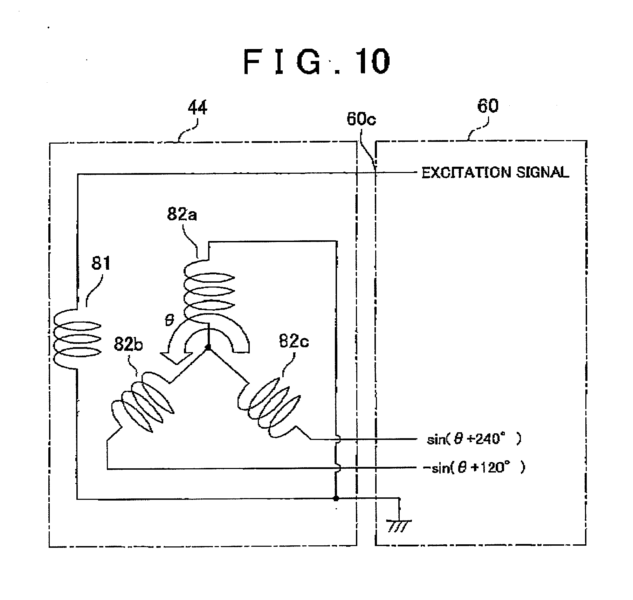

2) FIG. 10 is a schematic diagram showing the configuration of a resolver that is different from the resolvers in the above-described embodiments. As shown in FIG. 10, one of the resolver coils 82a to 82c that are provided at regular intervals (resolver coil 82a in FIG. 10) may be connected to a GND line, the electrical angle θ may be calculated based on the amplitudes (sin(θ + 240°) and -sin(θ + 120°) that are output from the other resolver coils (resolver coils 82b and 82c in FIG. 10), and whether an abnormality has occurred in the resolver may be determined based on the electrical angle θ.

In this configuration, because the voltage at the connection point 83 changes as the electrical angle θ changes, whether an abnormality has occurred in the resolver is not determined based on the sum Fa. However, the square sum Fs is theoretically a constant value. Therefore, whether an abnormality has occurred in the resolver is determined based on the square sum Fs.

In a resolver and an electric power steering apparatus that uses the resolver, one ends of resolver coils that are provided at regular intervals with respect to the rotation center of a resolver rotor are electrically connected at one connection point, and the voltage at the connection point is maintained at a predetermined reference voltage. If at least one of the condition that the square sum Fs does not satisfy the condition F1 < Fs < F2 (the square sum Fs is not within a predetermined first range) and the condition that the sum Fa does not satisfy the condition |Fa| < F3 (the sum Fa is not within a predetermined second range) is satisfied, the ECU determines that an abnormality has occurred in the resolver.

**Claims**

1. An abnormality detection unit for a resolver, wherein
first ends of resolver coils of a resolver are electrically connected to each other at one connection point, and a voltage at the connection point is maintained at a predetermined reference voltage, and
an occurrence of an abnormality in the resolver is determined, if at least one of a condition that a sum of square values of amplitude values of sine-wave signals output from second ends of resolver coils is not within a predetermined first range and a condition that a sum of the amplitude values of the sine-wave signals is not within a predetermined second range is satisfied.

2. The abnormality detection unit according to claim 1, further comprising:

an electrical angle calculator that calculates the electrical angle based on two different sine-wave signals among the sine-wave signals,
wherein
at least two electrical angles are calculated by the electrical angle calculator, and
an occurrence of an abnormality in the resolver is determined, if at least one of the condition that the sum of the square values of the amplitude values of the sine-wave signals is not within the predetermined first range, the condition that the sum of the amplitude values of the sine-wave signals is not within the predetermined second range, and a condition that one of differences between the electrical angles calculated by the electrical angle calculator is not within a predetermined third range is satisfied.

3. An electric power steering apparatus that uses the abnormality detection unit for the resolver according to claim 1 or 2, wherein a steering operation is assisted by a motor based on the sine-wave signals output from the resolver, and the motor is controlled based on the abnormality of the resolver detected by the abnormality detection unit.

FIG.1

# F I G . 2

FIG. 3

# FIG.4

EP 2 159 548 A2

# FIG.5

EP 2 159 548 A2

# FIG.6

START

S101 — OBTAIN EACH AMPLITUDE VALUE

S103 — CALCULATE SQUARE SUM

S105 — CALCULATE SUM

S107

$F_1 < F_6 < F_2$

NO

YES

S109

$|F_a| < F_3$

YES

NO

S111 — DETECT ABNORMALITY

END

# FIG.7

EP 2 159 548 A2

# FIG.8

START

S101 — OBTAIN EACH AMPLITUDE VALUE

S103 — CALCULATE SQUARE SUM

S105 — CALCULATE SUM

S107
$F_1 < F_s < F_2$
NO
YES

S109
$|F_a| < F_3$
NO
YES

S201 — CALCULATE ELECTRICAL ANGLE

S203
IS EACH OF ALL DIFFERENCES BETWEEN ELECTRICAL ANGLES EQUAL TO OR SMALLER THAN THRESHOLD $\Delta\theta$?
YES
NO

S111 — DETECT ABNORMALITY

END

# F I G . 9

# FIG.10

EXCITATION SIGNAL

44    60c    60

82a

81

θ

82b    82c

$\sin(\theta + 240°)$

$-\sin(\theta + 120°)$

EP 2 159 548 A2

# FIG.11

EP 2 159 548 A2

# FIG. 12

100a

ECU

EXCITATION
SIGNAL

102a

R

sin θ +e

101

102c      102b

cos θ

θ

−cos θ

EP 2 159 548 A2

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 3103487 B